Europäisches Patentamt

European Patent Office

Office européen des brevets

(19)

(11) Veröffentlichungsnummer: **0 459 346 A2**

(12) **EUROPÄISCHE PATENTANMELDUNG**

(21) Anmeldenummer: **91108568.6**

(22) Anmeldetag: **27.05.91**

(51) Int. Cl.⁵: **B60R 11/02, H04M 1/03**

(30) Priorität: **26.05.90 DE 9005989 U**

(43) Veröffentlichungstag der Anmeldung:
**04.12.91 Patentblatt 91/49**

(84) Benannte Vertragsstaaten:
**AT BE CH DE DK ES FR GB GR IT LI LU NL SE**

(71) Anmelder: **VOTRONIC ENTWICKLUNGS- UND
PRODUKTIONSGESELLSCHAFT FÜR
ELEKTRONISCHE GERÄTE mbH
Saarbrücker Strasse, 8
W-6670 St. Ingbert (DE)**

(72) Erfinder: **Voit, Stefan, Dipl.-Ing.
Purrmannstrasse 15
W-6670 St. Ingbert (DE)**

(74) Vertreter: **Vièl, Georg, Dipl.-Ing.
Patentanwalt Weinbergweg 15
W-6600 Saarbrücken (DE)**

(54) Hör- und Sprecheinheit für in Kraftfahrzeugen angeordnete, mobile Telefone.

(57) Die Erfindung betrifft eine Hör- und Sprecheinheit für in Kraftfahrzeugen angeordnete mobile Telefone, bei der eine Hörmuschel und ein Mikrofon vorhanden sind.

Der Erfindung liegt die Aufgabe zugrunde, zusätzlich zu dem mobilen Telefon in Kraftfahrzeugen eine Hör- und Sprecheinheit zur Verfügung zu stellen, die ein geringes Gewicht aufweist, in unmittelbarer Nähe des Telefons unterbringbar ist, und die gleichzeitig die Möglichkeit zum Freisprechen besitzt.

Diese Aufgabe wird erfindungsgemäß dadurch gelöst, daß auf der Rückseite der Hör- und Sprecheinheit ein Lautsprecher angeordnet ist, daß das Mikrofon an einem schwenkbaren Arm angebracht ist und daß der Lautsprecher bei eingeschwenktem Arm und die Hörmuschel bei ausgeschwenktem Arm einschaltbar sind.

Die wesentlichen Vorteile bestehen darin, daß durch die erfindungsgemäß ausgebildete Hör- und Sprecheinheit das Telefonieren unter Verwendung eines mobilen Telefons in keiner Weise eingeschränkt wird. Mit der neuen Hör- und Sprecheinheit steht ein leichtes Gerät zur Verfügung, das alternativ zu dem mobilen Telefon als Hör- und Sprecheinheit sowohl beim üblichen Telefonieren als auch beim Freisprechen in Kraftfahrzeugen Verwendung findet.

Fig. 3

EP 0 459 346 A2

Die Erfindung betrifft eine Hör- und Sprecheinheit für in Kraftfahrzeugen angeordnete mobile Telefone, bei der eine Hörmuschel und ein Mikrofon vorhanden sind.

Mobile Telefone für das Telefonieren aus Kraftfahrzeugen sind zweckmäßig in Schutzhalterungen in Reichweite des Fahrers untergebracht. Sie werden, sofern ein Freisprechen aufgrund der äußeren Umstände, beispielsweise Lärm oder schlechte Verständigung, nicht möglich ist, zum Führen der Telefongespräche der Halterung entnommen und an das Ohr geführt.

Eine derartige, taschenartige Halterung, die in vorteilhafter Weise auf einem Schwanenhals aufsitzt, ist beispielsweise aus dem DE-GM 88 13 629 bekannt.

Als nachteilig hat sich erwiesen, daß beim Telefonieren das aufgrund der eingebauten Elektronik und Mechanik, sowie den mitgeführten, geräteeigenen Batterien zur Energieversorgung relativ schwere mobile Telefon an das Ohr geführt werden muß und dabei der Arm des Teilnehmers rasch ermüdet.

Der Erfindung liegt die Aufgabe zugrunde, zusätzlich zu dem mobilen Telefon in Kraftfahrzeugen eine Hör- und Sprecheinheit zur Verfügung zu stellen, die ein geringes Gewicht aufweist, in unmittelbarer Nähe des Telefons unterbringbar ist, und die gleichzeitig die Möglichkeit zum Freisprechen besitzt.

Diese Aufgabe wird erfindungsgemäß dadurch gelöst, daß auf der Rückseite der Hör- und Sprecheinheit ein Lautsprecher angeordnet ist, daß das Mikrofon an einem schwenkbaren Arm angebracht ist und daß der Lautsprecher bei eingeschwenktem Arm und die Hörmuschel bei ausgeschwenktem Arm einschaltbar sind.

Eine Weiterbildung der Erfindung besteht darin, daß zum Einschalten des Lautsprechers und der Hörmuschel in dem schwenkbaren Arm ein Magnet vorgesehen ist, der einer in der Hör- und Sprecheinheit angeordneten Schaltvorrichtung zugeordnet ist.

Die mit der Erfindung erzielten Vorteile bestehen insbesondere darin, daß der Arm des Teilnehmers beim Halten der relativ leichten Hör- und Sprecheinheit am Ohr nicht so rasch ermüdet, und daß außerdem auch die Hörund Sprecheinheit mit der notwendigen Einrichtung zum Freisprechen ausgestattet ist, die sich selbsttätig ein- bzw. abschaltet.

Ein Ausführungsbeispiel der Erfindung ist in den Zeichnungen dargestellt und wird im folgenden näher beschrieben.

Es zeigt
Fig. 1, Fig. 2 und Fig. 3 die Vorder-, Seiten- und Rückansicht der erfindungsgemäßen Hör- und Sprecheinheit schematisch,
Fig. 4 und Fig. 5 ein mobiles Telefon in einem Kraftfahrzeug mit der erfindungsgemäßen Hörund Sprecheinheit in zwei Ansichten.

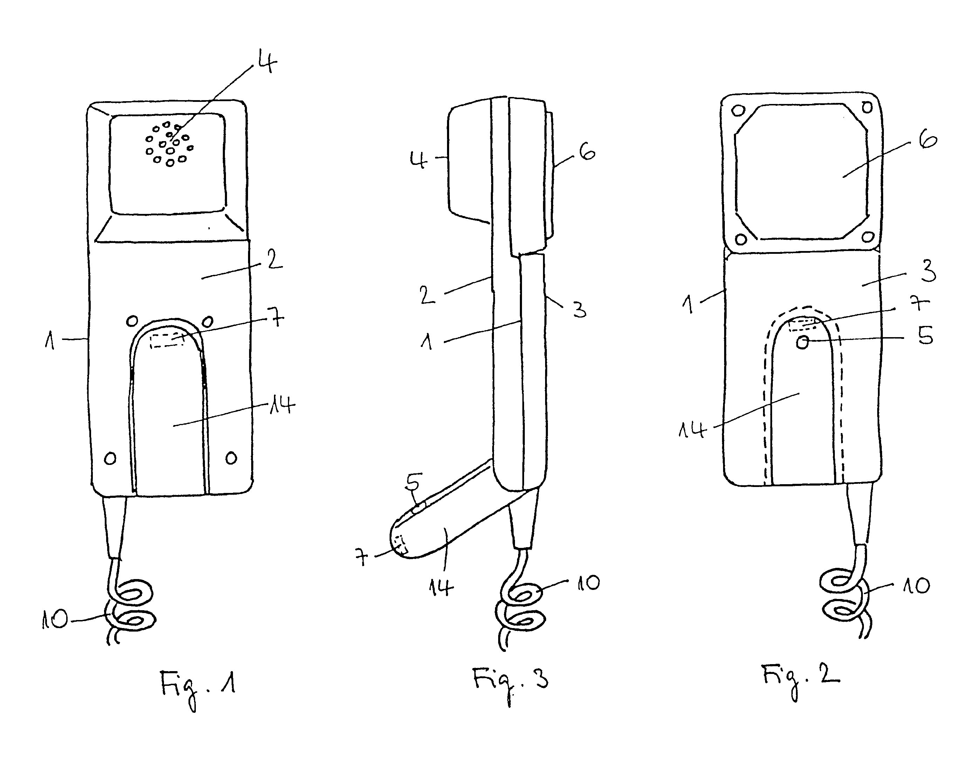

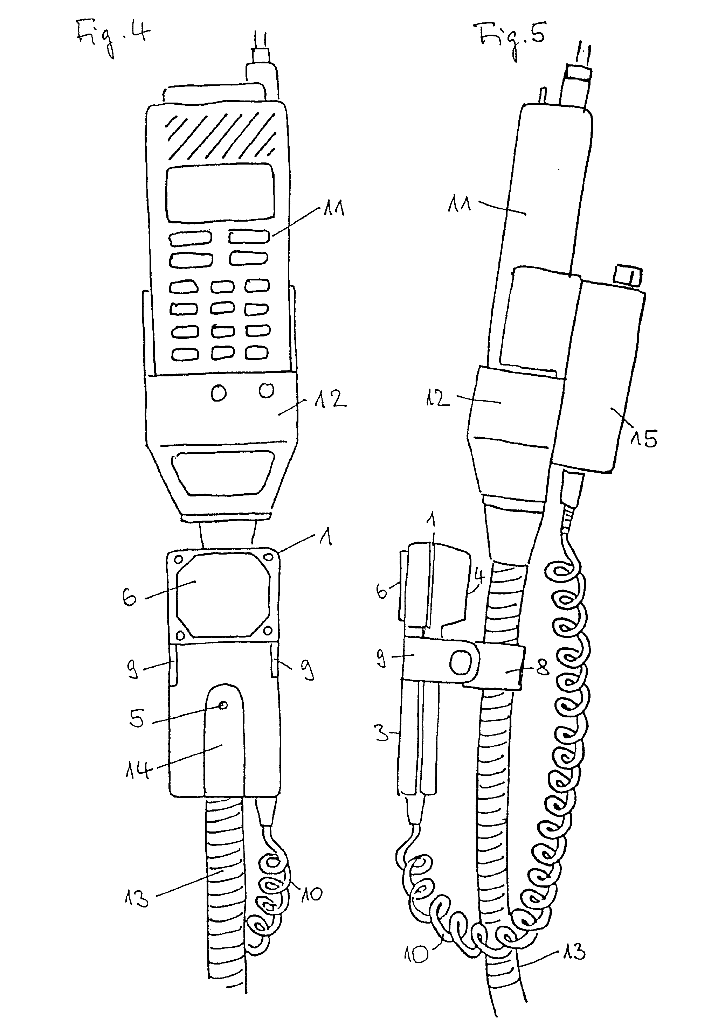

Die Fig. 1 bis 3 zeigen schematisch die Hör- und Sprecheinheit 1 nach der Erfindung in Vorder-, Seiten- und Rückansicht. Die Hör- und Sprecheinheit 1 weist auf der Vorderseite 2 die an sich bekannte Hörmuschel 4 auf. Das Mikrofon 5 befindet sich in einem schwenkbaren Arm 14, der in der Hör- und Sprecheinheit 1 drehbar gelagert ist. Wie Fig. 3 zeigt, hat die neue Hör- und Sprecheinheit 1 dann dieselbe Funktion wie ein üblicher Handhörer, wobei die Hörmuschel 4 und das Mikrofon 5 vorgesehen sind. Die Hörund Sprecheinheit 1 ist über ein Anschlußkabel 10 mit dem eigentlichen Handtelefon 11 verbunden, gegebenenfalls unter Zwischenschaltung einer Zusatzeinrichtung 15 (Fig. 5).

Die Hörmuschel 4 wird beim Herausklappen des Armes 14 automatisch eingeschaltet. Im eingeklappten Zustand des schwenkbaren Armes 14 ist automatisch die Hörmuschel 4 abgeschaltet und der Lautsprecher 6, der sich auf der Rückseite 3 der Hörund Sprecheinheit 1 befindet, eingeschaltet. Um diese Schaltvorgänge ausführen zu können, kann am Ende des schwenkbaren Armes 14 ein Magnet 7 angeordnet sein, dem in der Hör- und Sprecheinheit 1 eine entsprechende Schaltvorrichtung (Reed-Kontakt) zugeordnet ist.

Ist der schwenkbare Arm 14 eingeklappt, so bietet sich das Bild gemäß Fig. 2, d.h. die Anlage ist bereit zum Freisprechen mit dem Lautsprecher 6 und dem gleichen Mikrofon 5, was vorher zusammen mit der Hörmuschel 4 die übliche Funktion eines Handhörers erfüllt hat.

In den Fig. 4 und 5 ist ein mobiles Telefon 11 dargestellt, das in einer Halterung 12 untergebracht ist. Die Halterung 12 wird von einem Schwanenhals 13 getragen, an dem mit Hilfe einer Schelle 8 eine Klammer 9 angebracht ist. Die Klammer 9 dient zur Aufnahme der Hör- und Sprecheinheit 1, wenn - im eingeklappten Zustand des Schwenkarmes 14 - der Betrieb "Freisprechen" gewünscht wird.

Durch die erfindungsgemäß ausgebildete Hörund Sprecheinheit 1 wird das Telefonieren unter Verwendung eines mobilen Telefons 11 in keiner Weise eingeschränkt. Mit der neuen Hör- und Sprecheinheit 1 steht ein leichtes Gerät zur Verfügung, das alternativ zu dem mobilen Telefon 11 als Hör- und Sprecheinheit sowohl beim üblichen Telefonieren als auch beim Freisprechen in Kraftfahrzeugen Verwendung findet.

**Patentansprüche**

1. Hör- und Sprecheinheit für in Kraftfahrzeugen angeordnete mobile Telefone, bei der eine Hörmuschel und ein Mikrofon vorhanden sind, dadurch **gekennzeichnet**, daß auf der Rückseite (3) der Hör- und Sprecheinheit (1) ein Lautsprecher (6) angeordnet ist, daß das Mikrofon (5) an einem schwenkbaren Arm (14) angebracht ist und daß der Lautsprecher (6) bei eingeschwenktem Arm (14) und die Hörmuschel (4) bei ausgeschwenktem Arm (14) einschaltbar sind.

2. Hör- und Sprecheinheit nach Anspruch 1, dadurch **gekennzeichnet**, daß zum Einschalten des Lautsprechers (6) und der Hörmuschel (4) in dem schwenkbaren Arm (14) ein Magnet (7) vorgesehen ist, der einer in der Hör- und Sprecheinheit angeordneten Schaltvorrichtung zugeordnet ist.

Fig. 1

Fig. 3

Fig. 2

Fig.4    Fig.5